# NEW EUROPEAN PATENT SPECIFICATION

(11) **EP 1 921 918 B2**
(45) Date of publication and mention of the opposition decision: **15.07.2015**
(45) Mention of the grant of the patent: 06.05.2009
(21) Application number: 06775968.8
(22) Date of filing: 04.09.2006
(51) Int. Cl.: A01N 43/653

(54) **CONCENTRATED LIQUID TRIAZOLE FUNGICIDE FORMULATIONS**
KONZENTRIERTE FLÜSSIGE TRIAZOLFUNGIZIDFORMULIERUNGEN
FORMULATIONS LIQUIDES CONCENTRÉES À BASE DE FONGICIDES TRIAZOLES

(30) Priority: 05.09.2005 EP 05388072
(43) Date of publication of application: 21.05.2008
(73) Proprietor: Cheminova A/S, 7620 Lemvig (DK)
(72) Inventor: PEDERSEN, Morten, DK-7620 Lemvig (DK)
(74) Representative: Rasmussen, Torben Ravn
(86) International application number: PCT/DK2006/000483
(87) International publication number: WO 2007/028387

(56) References cited:
- EP-A- 0 933 025
- WO-A-91/08665
- A. KNOWLES: 'New Developments in Crop Protection Product Formulation' AGROW REPORTS May 2005, page 50

## Description

The present invention relates to concentrated liquid formulations comprising triazole fungicides as defined in claim 1 and to the use of such formulations in diluted form for the control of harmful fungi.

### Background

Triazole fungicides, which exhibit their antifungal activity by inhibiting fungal ergosterol biosynthesis, are economically important agricultural chemicals as they are widely used on crops such as wheat, barley, soybean and orchard fruits and have protective, curative and eradicant properties. While concentrated compositions comprising triazole fungicides as active ingredient are more preferred as commercially available goods, the end consumer uses, as a rule, dilute compositions. A problem encountered when diluting concentrated compositions comprising triazole fungicides prior to application, e.g. diluting with water in spray tanks for aqueous spray liquid application, is crystallization of the active ingredient. Filters and/or nozzles in the spray equipment are more or less easily blocked as a result of the crystallizing active ingredient during application. The crystallization increases over time meaning that application of the spray liquid must take place immediately or within a few hours after dilution of the concentrated compositions. This however, is not always easily done as seen from a practical point of view. There have been numerous suggestions as to how to solve this crystallization problem. By example, in United States patent no. US 5,206,225 it is suggested to use certain alkylcarboxylic acid dimethylamides as crystallization inhibitors in spray solutions; in US patent no. 5,476,845 certain phosphoric esters are suggested as crystallization inhibitors; in US 5,328,693 and US 5,369,118 certain long chain alkyl lactams are suggested as crystallization inhibitors; US 5,053421 suggests di-styryl-phenyl-tri-glycol ether as crystallization inhibitor; in WO 03/075657 lactate esters are suggested as crystallization inhibitors; WO 95/13702 suggests the use of certain phosphinic acid esters as crystallization inhibitors; in WO 93/15605 certain benzene compounds being substituted with hydroxy and alkyl groups are suggested as crystallization inhibitors; WO 95/15686 mentions the use of certain carbamide acid esters as crystallization inhibitors; WO 95/15687 teaches the use of certain urea-derivatives as crystallization inhibitors; in WO 95/15688 azolyl derivatives are suggested as crystallization inhibitors; WO 95/15689 suggests certain cyclic imides useful as crystallization inhibitors; in WO 95/15590 certain phenyl carboxylic acid amides are used as crystallization inhibitors; WO 95/19708 teaches the use of N-acyl-lactams as crystallization inhibitors; in WO 95/21525 dicarboxylic acid bis-dimethylamides are suggested as crystallization inhibitors and WO 03/007716 suggest to incorporate polyvinyl alcohol in liquid formulations as a crystallization inhibitor.

However, the prior suggested solutions to the crystallization issue incorporate materials that are expensive and/or are not attractive from an environmental point of view.

In European patent application no. EP 933025-A1 emulsifiable concentrate formulations (EC) are disclosed comprising a pesticide, a solvent system comprising esters of plant oils and a water-miscible polar aprotic cosolvent and an emulsifier system comprising a mixture of both anionic and non-ionic surfactants. However, employing such system incorporating a triazole fungicide does not prevent the triazole from crystallization when the resulting formulation is diluted prior to application.

In International application no. WO 91/08665-A1, stable emulsifiable concentrate formulations are disclosed comprising a pesticide, a solvent system comprising a mixture of a first component, preferably N-methylpyrrolidone, and a second component, preferably selected among C6-C14-alkylpyrrolidones, and optionally a diluent.

EP 1 023 837 discloses a non-aqueous, emulsifiable concentrate formulation, comprising an azole derivative.

Despite the progress disclosed in the prior art there is still a need for improved liquid concentrated triazole fungicide formulation giving rise to a low degree of crystal formation in the diluted ready for use solutions, which formulations are stable and preferably environmentally friendly.

### Description of the invention

The present invention relates to concentrated liquid formulations comprising:
a) 50-215 g/l, in particular 80-210 g/l, of one active ingredient selected among triazole fungicides wherein the triazole fungicide is selected as tebuconazole
b) 100-600 g/l, in particular 150-450 g/l, one or more solvents selected among esters of plant oils
c) 50-400 g/l, in particular 100-300 g/l, one or more water-miscible polar aprotic co-solvents
d) 50-300 g/l, in particular 100-250 g/l, of one or more water-immiscible co-solvents selected among aromatic hydrocarbons and alcohols
e) 10-200 g/l, in particular 50-150 g/l of an emulsifier system comprising one or more surfactants
f) 0-300 g/l of further auxiliaries

The new formulations according the invention have a high stability and do not give rise to precipitation of crystals after dilution in a significant degree. This has the benefit that blocking of filters and/or nozzles in the spray equipment is highly avoided resulting in fewer inadvertent interruptions of the application operations of the fungicide. Further, the higher stability of the diluted formulations gives the user a higher freedom to prepare larger amounts of the diluted formulation without encountering problem of precipitations in the diluted formulation. Additionally, the prepared diluted formulation can be allowed to stand for a longer period without problems due to crystallization, which provides more flexibility for the user.

Without wishing to be bound by any theory it is believed that the beneficial stability of the formulations according to the invention is the particular combination of one or more water miscible polar aprotic co-solvents and one or more water immiscible co-solvent selected among aromatic hydrocarbons and alcohols; where in particular the water immiscible co-solvent is believed to prevent crystallization during dilution with water.

The concentrated formulations are storage stable. Compared to similar higher concentrated formulations, the formulations according to the invention show improved fungicidal effect and non-crystallization properties.

Surprisingly, the new formulations according to the invention have a higher fungicidal activity than formulations according to the prior art when applied in diluted form at the same active ingredient concentration.

In this embodiment concentrated liquid formulations of triazole fungicides are provided, which are environmental friendly and does not result in crystallization after dilution and that have a surprisingly high fungicidal activity.

Examples of commercially available triazole fungicides include bitertanol, bromuconazole, cyproconazole, diclobutrazole, diniconazole, epoxiconazole, etaconazole, fenbuconazole, fluquinconazole, flusilazole, flutriafol, hexaconazole, myclobutanil, penconazole, propiconazole, prothioconazole, tebuconazole, tetraconazole, triadimefon, triadimenol and triticonazole, whereby tebuconazole is used in this invention.

The esters of plant oils (b) are preferably alkyl esters of fatty acids of plant oils, for example obtainable from medium chained fatty acids by esterification with alkanols, and include (C₁-C₂₀)-alkyl (C₅-C₂₂)-fatty acid esters. Preferred fatty acids of these plant oils have 5 to 20, in particular 6 to 18 carbon atoms. Such fatty acids are usually mixtures of acids with various chain lengths. Preferably methyl esters of plant oils are used, and more preferably mixtures of methylated plant oils wherein the main component (i.e. more than 50%) has a carbon chain length between 7-16, more preferably 8-14. Examples of methyl esters of plants oils are Stepan C-25 methyl ester or Stepan C-40 methyl ester both available from Stepan or Witconol 2301, Witconol 2307, Witconol 2308, Witconol 2309 all available from Witco Corporation or Edenor ME C6-C10, Edenor ME C12 98/100 both available from Cognis, as well as the Agnique ME series of products available from Cognis such as Agnique ME 890-G.

The water-miscible polar aprotic co-solvents (c) are preferably selected among N-methylpyrrolidone (NMP), dimethyl sulfoxide (DMSO), 2-propanol, tetrahydrofuran, propylene carbonate, gamma-butyrolactone, cyclohexanone, tetrahydrothiophene-1,1-dioxide, N-cyclohexyl-2-pyrrolidone, tetramethylurea, with NMP, DMSO and gamma-butyrolactone being most preferred.

The water-immiscible co-solvent(s) (d) is essential to incorporate in the formulation to prevent the tebuconazole from crystallization when the formulation is diluted. Water immiscible co-solvents are aromatic hydrocarbons (e.g. blends of aromatic hydrocarbons such as Solvesso 100 available from Exxon) and alcohols. Aromatic hydrocarbons in particular are preferred. The fact that different solvents can work as co-solvent (d) may indicate that the co-solvent (d) works through various physicochemical and chemical mechanisms such as for instance increase of triazole fungicide solubility, triazole fungicide crystal inhibition and/or change of the triazole fungicide oil/water partition coefficient.

The ability of a solvent to dissolve a given substance, e.g. a triazole fungicide, may conveniently be evaluated by parameter consideration according to the so-called "Hansen system", which is described in "Hansen Solubility Parameters - A Users Handbook", published by CRC Press (2000). According to the Hansen system, a solvent or mixture of solvents may be described by three solubility parameters δd (dispersion parameter), δp (polarity parameter) and δh (hydrogen bonding parameter). Different solvents with regard to Hansen solubility parameters and molecular structures have been found to be particular useful as water-immiscible co-solvent (d) together with esters of plant oils, i.e., solvent (b). Water-immiscible co-solvents or mixtures of such solvents having Hansen solubility parameters in the following ranges are preferred: δd 14.3-17.9 MPa^{½}, δp 0.4-10.0 MPa^{½} and δh 1.0-13.7 MPa^{½}, and more preferably δd 14.4-17.7 MPa^{½}, δp 2.0-8.0 MPa^{½} and δh 7.0-13.6 MPa^{½}.

Among especially preferred water immiscible co-solvents are C5-C10 alcohols, more preferably C5-C9 alcohols, even more preferably C6-C9 alcohols and in particular C8 alcohols. Examples of such alcohols include pentanol, hexanol, 2-ethyl butanol, heptanol, 2-ethylhexanol, octanol and 2-octanol. Octanol is especially preferred.

In the emulsifier system (e), the surfactant(s) may be chosen among such surface active agents belonging to the class of anionic surfactants, non-ionic surfactants cationic surfactants, zwitterionic surfactants, polymer surfactants, and mixtures thereof. In a preferred embodiment the emulsifier system comprises at least one anionic surfactant. In another preferred embodiment, the surfactants are chosen among anionic and non-ionic surfactants and mixtures thereof. In a more preferred embodiment the emulsifier system comprises solely one or more anionic surfactants, and even more preferably two or more anionic surfactants.

Examples of suitable anionic surfactants (e) include alkali, alkaline earth or ammonium salts of the fatty acids, such as potassium stearate, alkyl sulfates, alkyl ether sulfates, alkylsulfonates or iso-alkylsulfonates, alkylbenzenesulfonates such as sodium dodecylbenzenelsulfonate or calcium docecylbenzenesulfonate, alkylnaphthalenesulfonates, alkyl methyl ester sulfonates, acyl glutamates, alkylsulfosuccinates, sarcosinates such as sodium lauroyl sarcosinate, taurates or ethoxylated and phosphorylated styryl-substituted phenols e.g. tristyrylphenyl ether phosphate added with polyoxyethylene. Preferred are sodium-, and calcium-dodecylbenzene sulfonate, eg. Phenylsulfonat CA available from Clariant, and tristyrylphenyl ether phosphate added with polyoxyethylene e.g. 2,4,6-tri-(1-phenylethyl)-phenol polyglycol ether phosphoric acid ester available from Clariant under the trade name Dispersogen LFH.

Examples of cationic surfactants include quaternary ammonium salts which contain, as substituents, at least one alkyl radical having 8 to 22 C atoms and, as further substituents, lower, non-halogenated or halogenated alkyl, benzyl or lower hydroxy alkyl radicals. The salts are preferably in the form of halides or alkyl sulfates.

Examples of non-ionic surfactants include alkoxylated animal or vegetable fats and oils such as corn oil ethoxylates, castor oil ethoxylates, talo fat ethoxylates, glycerol esters such as glycerol monostearate, fatty alcohol alkoxylates and oxoalcohol alkoxylates, fatty acid alkoxylates such as oleic acid ethoxylates, alkylphenol alkoxylates such as isononylphenol ethoxylates, fatty amine alkoxylates, fatty acid amide alkoxylates, sugar surfactants such as sorbitan fatty acid esters (sorbitan monooleate, sorbitan tristearate), polyoxyethylene sorbitan fatty acid esters, alkyl polyglycosides, ethoxylated styryl-substituted phenols, N-alkylgluconamides, alkylmethyl sulfoxides, alkyldimethylphosphine oxides such as tetradecyldimethylphosphine oxide.

Examples of zwitterionic surfactants include alkylbetaines, alkylamidobetaines, amino-propionates, aminoglycinates, imidazolinium betaines and sulfobetaines. Examples of polymer surfactants include di-, tri- or multi-block polymers of the (AB)x, ABA and BAB type, such as polyethylene oxide block polypropylene oxide, polystyrene block polyethylene oxide, AB comb polymers such as polymethacrylate comb polyethylene oxide or polyacrylate comb polyethylene oxide.

Further optionally auxiliaries (f) which may be included in the concentrated formulation are water, pH-adjusters, thickeners, antifreeze agents, preservatives, antifoaming and defoamer agents, spreading agents, stickers, UV-protectants, stabilizers, and one or more additional fungicides. Such auxiliaries are generally known within the art of formulation chemistry, and although a specific ingredient is classified as falling within one category, it may well serve the purpose of any of the others.

The pH adjusters include both acids and bases of the organic or inorganic type. Suitable pH adjusters include organic acids and alkali metal compounds. The organic acids include those such as citric, malic, adipic, cinnamic, fumaric, lactic, maleic, succinic, and tartaric acid, and the mono-, di-, or tribasic salts of these acids are suitable organic acid salts. Suitable salts of these acids are the soluble or meltable salts and include those salts in which one or more acidic protons are replaced with a cation such as sodium, potassium, calcium, magnesium, and ammonium. Alkali metal compounds include hydroxides of alkali metals such as sodium hydroxide and potassium hydroxide, carbonates of alkali metals such as sodium carbonate and potassium carbonate, hydrogencarbonates of alkali metals such as sodium hydrogencarbonate and alkali metal phosphates such as sodium phosphate.

Thickeners and film-forming agents include starches, gums, casein and gelatine, polyvinyl pyrrolidones, polyethylene and polypropylene glycols, polyacrylates, polyacrylamides, polyethyleneimines, polyvinyl alcohols, polyvinyl acetates, and methyl-, hydroxyethyl- and hydroxypropylcelluloses and derivatives thereof Examples of the antifreezing agent include ethylene glycol, diethylene glycol, propylene glycol and the like.

Typical preservatives include methyl and propyl parahydroxybenzoate, 2-bromo-2-nitro-propane-1,3-diol, sodium benzoate, formaldehyde, glutaraldehyde, O-phenylphenol, benzisothiazolinones, 5-chloro-2-methyl-4-isothiazolin-3-one, pentachlorophenol, 2-4-dichlorobenzylalcohol and sorbic acid and derivatives thereof.

Preferred anti-foaming and defoamer agents are silicone based compounds e.g. polyalkylsiloxanes.

Examples of stabilizers include phthalate(s) such as diethylhexyl phthalate, ethylhexyl phthalate, dimethyl phthalate, diethyl phthalate, butylbenzyl phthalate, dibutyl phthalate, diisononyl phthalate, and dioctyl phthalate. Preferred are dimethyl phthalate, diethyl phthalate and diisononyl phthalate, and especially diethyl phthalate.

The optional additional fungicides can advantageously be included for example to broaden the spectrum of action or to prevent the build-up of resistance. Suitable examples of such additional fungicides are e.g 2-aminobutane; 8-hydroxyquinoline sulphate; 2-phenylphenol (OPP), aldi-morph, ampropylfos, anilazine, azoxystrobin, benalaxyl, benodanil, benomyl, binapacryl, biphenyl, blasticidin-S, bupirimate, buthiobate, calcium polysulphide, captafol, captan, carbendazim, carboxin, carpropamid, quinomethionate, chloroneb, chloropicrin, chlorothalonil, chlozolinate, cufraneb, cyazofamid, cymoxanil, cyprodinil, cyprofuram, dichlorophen, diclocymet, diclofluanid, diclomezin, dicloran, diethofencarb, diflumetorim, dimethirimol, dimethomorph, dinocap, diphenylamine, dipyrithion, ditalimfos, dithianon, dodine, drazoxolon, edifenphos, enestroburin, ethaboxam, ethirimol, etridiazole, famoxadone, fenamidone, fenarimol, fenfuram, fenhexamid, fenitropan, fenpiclonil, fenpropidin, fenpropimorph, fentin acetate, fentin hydroxide, ferbam, ferimzone, fluazinam, fludioxonil, flumorph, fluoromide, fluoxastrobin, flusulfamide, flutolanil, folpet, fosetyl-aluminium, fthalide, fuberidazole, furalaxyl, furmecyclox, guazatine, hexachlorobenzene, imazalil, iminoctadine, iprobenfos (IBP), iprodione, iprovalicarb, isoprothiolane, kasugamycin, copper preparations such as: copper hydroxide, copper naphthenate, copper oxychloride, copper sulphate, copper oxide, oxine-copper and Bordeaux mixture, mancopper, mancozeb, maneb, mepanipyrim, kresoxim-methyl, mepronil, metalaxyl, methasulfocarb, methfuroxam, metiram, metominostrobin, metrafenone, metsulfovax, myclobutanil, nickel dimethyldithiocarbamate, nitrothal-isopropyl, nuarimol, ofurace, oxadixyl, oxamocarb, oxycarboxin, pefurazoate, pencyuron, phosdiphen, picoxystrobin, pimaricin, piperalin, polyoxin, probenazole, prochloraz, procymidone, propamocarb, propineb, pyraclostrobin, pyrazophos, pyrifenox, pyrimethanil, pyroquilon, quinoxyfen, quintozene (PCNB), silthiofam, spiroxamine, sulphur and sulphur preparations, tecloftalam, tecnazene, thiabendazole, thicyofen, thifluzamide, thiophanate-methyl, thiram, tolclophos-methyl, tolylfluanid, triazoxide, trichlamide, tricyclazole, tridemorph, trifloxystrobin, triflumizole, triforine, validamycin, vinclozolin, zineb, ziram, zoxamide, and combinations thereof.

The concentrated liquid formulations according to the invention are prepared in a conventional manner, by mixing all ingredients, preferably under stirring, and optionally prepared under elevated temperatures to ease formation of a homogeneous composition.

Common for all ingredients used according to the invention is that they be selected as not to cause any undesirable side effects when used in plant or seed protection.

Further, the invention relates to a method for the control of fungi comprising applying a formulation as described herein in diluted form to or near a plant or the seed infested with fungi or susceptible of being infested by fungi. These formulations may be diluted to concentrations down to between 0.0001 and 4% of active ingredient (a.i.) by weight of total solution. e.g. by dissolving the formulation in water. In general the a.i. concentrations are between 0.001 and 3% by weight, preferably 0.005 to 2% by weight of aqueous spray solution.

The doses usually applied are in the range of about 0.01 to 10 kg a.i./hectare. Methods of application include spray treatment, seed treatment or soil treatment. It has surprisingly been found the fungicidal effect of the formulations according to the invention show an improved fungicidal effect compared to similar higher concentrated formulations (i.e. greater than 220 g/l of triazole fungicide) when applied in diluted form but at the same dosage rates.

Furthermore, the invention relates to a method to prevent tebuconazole from crystallization when applied in an aqueous spray solution, said method comprising dissolving a formulation as described herein in water to form said spray solution, i.e. the triazole fungicides are prevented from crystallization by including in the aqueous spray solution a composition comprising items (b), (c), (d), (e) and optionally (f) as described herein. The concentration of the tebuconazole in the aqueous spray solution is as described above.

Moreover, the invention relates to the use of a liquid concentrated formulation as described herein as a fungicide.

The formulations have, for practical field application purposes, a very advantageous curative, preventive and systemic action for protecting cultivated plants (conventional or genetically modified). The formulations are effective especially against the phytopathogenic fungi belonging to the following classes: Ascomycetes (e.g. *Erysiphe, Venturia, Pyrenophora);* Basidiomycetes, e.g. rusts (e.g. *Puccinia* spp) and smuts *(Tilletia* spp and *Ustilago* spp); Deuteromycotina, (e.g. *Helminthosporium, Fusarium, Septoria,* and *Cercospora.)* The following important pathogens inter alia are controlled: *Tilletia caries, Drechslera teres, Fusarium nivale, Fusarium culmorum, Erysiphe graminis, Erysiphe cichoracearum, Sphaerotheca fuliginea, Podosphaera leucotricha, Uncinula necator, Puccinia graminis, Rhizoctonia solani, Ustilago tritici, Ustilago maydis, Helminthosporium gramineum, Helminthosporium oryzae, Venturia inaequalis, Septoria nodorum, Septoria triticii, Puccinia recondite, Puccinia hordei, Botrytis cinerea, Cercospora arachidicola, Pseudocercosporella herpotrichoides, Pyrenophora teres, Pyricularia oryzae, Hemileia vastatrix, Alternaria solani, Sclerotium rolfsii, Phakopsora pachyrhizi,* and *Phakopsora meibomiae.*

The concentrated liquid formulations according to the invention are stable for at least 24 months at 25°C and at least 3 months when stored at 40°C. Further, the formulations in diluted form, i.e. the spray liquid, remain free of crystal deposition as a minimum for several hours after dilution.

The invention is illustrated by the following examples. In the examples the following ingredients are mentioned with reference to their tradenames:
Agnique ME890-G, methyl ester of plant oils available from Cognis
Witconol 2309, methyl ester of plant oils available from Witco Corporation
Solvesso 100, blend of aromatic hydrocarbons, available from Exxon.
Edenor ME C6-C10, methyl ester of plant oils available from Cognis
Edenor ME C12 98/100, methyl ester of plant oils available from Cognis
Dispersogen LFH, phosphoric acid ester available from Clariant
Phenylsulfonat CA, sodium-dodecylbenzene sulphonate, available from Clariant.

### Example 1

Tebuconazole, N-methyl-2-pyrrolidone and Agnique ME890-G and octanol are mixed in the order specified in the table below. Stirring and heating to maximum 50°C are done in order to dissolve the tebuconazole. The emulsifiers, Dispersogen LFH and Phenylsulfonat CA, are added. Stirring and heating to maximum 50°C are continued until the formulation is homogenous. When still warm, i.e. 40-50°C, the formulation is filtered through Celatom filter aid. The product is a homogenous and transparent liquid. By mixing with water, spray liquids are prepared from the product thus obtained.

| **INGREDIENTS** | **g/1000 g** | **g/liter** |
|---|---|---|
| | | |
| a) Tebuconazole | 213.7 | 204.5 |
| | | |
| c) N-methyl-2-pyrrolidone | 157.9 | 151.1 |
| | | |
| b) Agnique ME890-G | 349.6 | 334.6 |
| | | |
| d) Octanol | 178.8 | 171.1 |
| | | |
| e) Dispersogen LFH | 40.00 | 38.3 |
| | | |
| e) Phenylsulfonat CA | 60.00 | 57.4 |

### Example 2 (comparative)

Tebuconazole, N-methyl-2-pyrrolidone and Agnique ME890-G and octanol are mixed in the order specified in the table below. Stirring and heating to maximum 50°C are done in order to dissolve the tebuconazole. The emulsifiers, Dispersogen LFH and Phenylsulfonat CA, are added. Stirring and heating to maximum 50°C are continued until the formulation is homogenous. When still warm, i.e. 40-50°C, the formulation is filtered through Celatom filter aid. The product is a homogenous and transparent liquid. By mixing with water, spray liquids are prepared from the product thus obtained.

| **INGREDIENTS** | **g/1000 g** | **g/liter** |
|---|---|---|
| | | |
| a) Tebuconazole | 260.6 | 253.3 |
| | | |
| c) N-methyl-2-pyrrolidone | 154.5 | 150.1 |
| | | |
| b) Agnique ME 890-G | 317.9 | 309.0 |
| | | |
| d) Octanol | 167.0 | 162.3 |
| | | |
| e) Dispersogen LFH | 50.00 | 48.6 |
| | | |
| e) Phenylsulfonat CA | 50.00 | 48.6 |

### Example 3 (comparative)

Using the procedure described in example 2 a formulation with the below tabulated ingredients is prepared:

| **INGREDIENTS** | **g/liter** |
|---|---|
| | |
| a) Tebuconazole | 228.0 |
| | |
| c) N-methyl-2-pyrrolidone | 155.8 |
| | |
| b) Agnique ME 890-G | 320.3 |
| | |
| d) Octanol | 168.3 |
| | |
| e) Dispersogen LFH | 50.9 |
| | |
| e) Phenylsulfonat CA | 50.9 |

### Example 4

Tebuconazole formulations were prepared according to examples 1, 2 and 3. The produced formulations were tested in a spraying tank as described below.

### Crystallisation in spraying tank

### Procedure:

1 litre tebuconazole formulation prepared according to example 2 or 1.25 litre tebuconazole formulation according to example 1 or 1.125 litre tebuconazole formulation according to example 3 was mixed with 100 litres of water (20 or 500 ppm) in a spraying tank. After 5 min. of mixing, additional 50-litre water was added and the mixing was continued for 5 extra min. The spraying liquid was seeded with 10 mg tebuconazole crystals.
I. A 1-litre sample of the spraying liquid was taken and sieved through a 75-µm sieve, and the sieve residue (crystals) was dried and weighed.
II. 100 litre spraying liquid was pumped through a filter and nozzle (red, no. 14) and back to the spraying tank. The spraying speed was about 1000 ml per min. The residue (crystals) on the filter and nozzle was isolated, dried and weighed.
III. A 1-litre sample of the spraying liquid was taken and sieved through a 75-µm sieve and the sieve residue (crystals) was dried and weighed.
IV. The spraying liquid in the tank was left unstirred until the next day.
V. Next day after a few min. mixing, a 1-litre sample was taken and sieved through a 75-µm sieve and the sieve residue (crystals) was dried and weighed.
VI. 100 litre spraying liquid was pumped through a filter and nozzle (red, no. 14) and back to the spraying tank. The spraying speed was about 1000 ml per min. The residue (crystals) on the filter and nozzle was isolated, dried and weighed.
VII. The filter and nozzle (red, no. 14) was replaced with a narrower filter and nozzle (yellow, no. 12). 100 litre spraying liquid was pumped through the filter and nozzle (yellow, no. 12) and back to the spraying tank. The residue (crystals) on the filter and nozzle was isolated, dried and weighed.

The results of the test are tabulated below.

| Spraying and sieving procedure, see text above | Formulation according to example 1 | | Formulation according to example 2 | | Formulation according to example 3 |
|---|---|---|---|---|---|
| Water type | | | | | |
| (ppm) | 20 | 500 | 20 | 500 | 500 |
| I. 11 sample | | | | | |
| - sieve residue | 0.3 mg | 0.3 mg | 0.0 mg | 1.5 mg | 1.4 mg |
| II. 100 1 spraying liquid noz zle red no.14 - sieve residue | 3.0 mg | 2.5 mg | 5.0 mg | 4.7 mg | 11.6 mg |
| III. 11 sample | | | | | |
| - sieve residue | 0.7 mg | 0.3 mg | 3.7 mg | 2.0 mg | 1.5 mg |
| V. 11 sample | | | | | |
| (next day) | 0.4 mg | 0.3 mg | 2.8 mg | 3.2 mg | 2.2 mg |
| - sieve residue | | | | | |
| VI. 1001 spraying liquid nozzle red no. 14 - sieve residue | 2.3 mg | 2.3 mg | 5.4 mg | 3.8 mg | 21.0 mg |
| VII. 1001 spraying liquid nozzle yellow no. 12 - sieve residue | 1.7 mg | 2.3 mg | 7.0 mg | 17.4 mg | 59.0 mg |

According to the test results, the tebuconazole formulation according to example 1 was superior to the formulations prepared according to examples 2 and 3 with regard to prevention of tebuconazole crystallization in the spraying tank. The superiority of the formulation according to example 1 was especially pronounced when a narrow filter and nozzle, i.e. nozzle no. 12, was applied in the test.

### Example 5

The efficacy of a tebuconazole formulation produced according to example 1 and a commercial tebuconazole 200 g/l EC formulation, i.e. Folicur 200 g/l available from Bayer CropSciences, was tested on soybeans against Asian rust, *Phakopsora pachyrhizi.*

The results are tabulated below.

| Formulation | Dose | % Average efficacy |
|---|---|---|
| | g tebuconazole/ha | on 4 parcels |
| Formulation produced | 80 | 92.62 |
| according to example 1 | | |
| | 100 | 93.73 |
| | 80 | 81.55 |
| Folicur 200 g/l EC | | |
| | 100 | 84.87 |

According to the results above, the tebuconazole EC formulation, produced as described in example 1, was more efficient than the Folicur 200 g/l formulation against Asian rust on soybeans. The superiority of the formulation produced according to example 1 when compared with Folicur 200 g/ EC is surprising because a formulation produced as described in example 2 was in several field tests only on par with Folicur 250 g/l EC formulation.

### Example 6

Efficacy of formulations prepared according to examples 1 and 2 were compared against brown rust on wheat. Both curative and protective greenhouse experiments were made. Two series of test results are tabulated below.

| | ED₅₀ Curative | ED₅₀ Protective |
|---|---|---|
| Formulation | (Confidence Interval 95%) | (Confidence Interval 95%) |
| | g tebuconazole per ha. | g tebuconazole per ha. |
| Formulation according | 3.2 (2.1-4.9) | 5.8 (5.0-6.7) |
| to example 1 | | |
| Formulation according | 3.8 (2.6-5.9) | 19.4 (15.7-23.9) |
| to example 2 | | |

| | ED₅₀ Curative | ED₅₀ Protective |
|---|---|---|
| Formulation | (Confidence Interval 95%) | (Confidence Interval 95%) |
| | g tebuconazole per ha. | g tebuconazole per ha. |
| Formulation according | 1.8 (1.2-2.6) | 6.1 (4.9-7.5) |
| to example 1 | | |
| Formulation according | 4.5 (2.6-5.9) | 14.9 (12.8-17.4) |
| to example 2 | | |

According to the results above, the tebuconazole formulation prepared as described in example 1 is more efficient than the formulation with an initial higher concentration of tebuconazole prepared according to example 2.

### Example 7 (Comparative)

Flutriafol, N-methyl-2-pyrrolidone and Agnique ME890-G and octanol are mixed in the order specified in the table below. Stirring and heating to maximum 50°C are done in order to dissolve the flutriafol. Dispersogen LFH and Phenylsulfonat CA are added. Stirring and heating to maximum 50°C are continued until the formulation is homogenous. When still warm, i.e. 40-50°C, the formulation is filtered through Celatom filter aid. The liquid product is homogenous and transparent. By mixing with water, spray liquids are prepared from the product thus obtained.

| **INGREDIENTS** | **g/1000 g** | **g/liter** |
|---|---|---|
| | | |
| a) Flutriafol | 110.1 | 105.4 |
| | | |
| c) N-methyl-2-pyrrolidone | 172.6 | 165.2 |
| | | |
| b) Agnique ME 890-G | 412.1 | 394.3 |
| | | |
| d) Octanol | 206.0 | 197.1 |
| | | |
| e) Dispersogen LFH | 39.68 | 37.97 |
| | | |
| e) Phenylsulfonat CA | 59.52 | 56.96 |

### Example 8

Using the procedure described in example 1 a formulation with the below tabulated ingredients is prepared:

| **INGREDIENTS** | **g/1000 g** |
|---|---|
| | |
| a) Tebuconazole | 214.8 |
| | |
| c) N-methyl-2-pyrrolidone | 202.7 |
| | |
| b) Witconol 2309 | 208.3 |
| | |
| d) Solvesso 100 | 208.3 |
| | |
| e) Dispersogen LFH | 40.00 |
| | |
| e) Phenylsulfonat CA | 60.00 |
| | |
| f) DL-lactate | 65.9 |

The liquid product is homogenous and transparent. By mixing with water, spray liquids are prepared from the product thus obtained.

### Example 9 (Comparative)

Using the procedure described in example 1 a formulation with the below tabulated ingredients is prepared:

| **INGREDIENTS** | **g/1000 g** | **g/liter** |
|---|---|---|
| | | |
| a) Tebuconazole | 224.9 | 218.6 |
| | | |
| c) N-methyl-2-pyrrolidone | 152.7 | 148.4 |
| | | |
| b) Agnique ME 890-G | 335.8 | 326.4 |
| | | |
| d) n-Hexanol | 186.6 | 181.4 |
| | | |
| e) Dispersogen LFH | 50.00 | 48.6 |
| | | |
| e) Phenylsulfonat CA | 50.00 | 48.6 |

The liquid product is homogenous and transparent. By mixing with water, spray liquids are prepared from the product thus obtained.

### Example 10

In order to study possible triazole-fungicide crystallization after diluting formulations according to examples 7-9 to spraying concentration, spray tank experiments were done in 100-150 litre scale in the laboratory. The hardness of the water used to dilute the products to spraying concentration was varied In some of the experiments seeding of the spray dilution with triazole-fungicide crystals was done at the beginning of the experiment, but this was not observed to cause crystallization.
The degree to which triazole-fungicide particles and crystals blocked spray tank filters and nozzles were used in the evaluation of the formulations. Using spray equipment mounted with nozzles number 12 and 14 with accompanying filters respectively, no blocking of filters and outlet openings of the spray equipment was observed even 24 hours after dilution in the spray tank.
Beside filter and nozzle blocking, wet sieve tests and microscopy of the spraying liquids were used to evaluate the performance of the formulations.

In the spray tank tests the formulations were typically at least as good as formulations prepared according to example 1 and with test results similar to those presented in example 4 for the same formulation.

### Example 11 (comparative)

A formulation was prepared as outlined in example 1, but without a water-immiscible co-solvent, with the ingredients specified in the table below.

| **INGREDIENTS** | **g/1000 g** | **g/liter** |
|---|---|---|
| | | |
| a) Tebuconazole | 217.4 | 210.0 |
| | | |
| c) N-methyl-2-pyrrolidone | 157.4 | 152.1 |
| | | |
| b) Agnique ME 890-G | 523.7 | 505.9 |
| | | |
| e) Dispersogen LFH | 42.51 | 41.07 |
| | | |
| e) Phenylsulfonat CA | 59.30 | 57.29 |

The composition gave an unacceptable degree of tebuconazole crystallization after dilution to spraying concentration. The crystals gave rise to filter and nozzle blockage in the spraying equipment.

### Example 12 (comparative)

A formulation was prepared as outlined in example 1, but without an ester of a plant oil, with the ingredients specified in the table below.

| **INGREDIENTS** | **g/1000 g** | **g/liter** |
|---|---|---|
| | | |
| a) Tebuconazole | 218.0 | 210.0 |
| | | |
| c) N-methyl-2-pyrrolidone | 157.8 | 152.0 |
| | | |
| d) Octanol | 525.4 | 506.1 |
| | | |
| e) Dispersogen LFH | 39.32 | 37.87 |
| | | |
| e) Phenylsulfonat CA | 59.39 | 57.20 |

The composition gave an unacceptable degree of tebuconazole crystallization after dilution to spraying concentration. The crystals gave rise to filter and nozzle blockage in the spraying equipment.

## Claims

1. A concentrated liquid formulation comprising
a) 50-215 g/l of one active ingredient selected among triazole fungicides, wherein the triazole fungicide is selected as tebuconazole,
b) 100-600 g/l of one or more solvents selected among esters of plant oils,
c) 50-400 g/l of one or more water-miscible polar aprotic co-solvents,
d) 50-300 g/l of one or more water-immiscible co-solvents selected among aromatic hydrocarbons and alcohols,
e) 10-200 g/l of an emulsifier system comprising one or more surfactants, and
f) 0-300 g/l of further auxiliaries.

2. The formulation according to claim 1, comprising
a) 80-210 g/l of one active ingredient selected among triazole fungicides, wherein the triazole fungicide is selected as tebuconazole,
b) 150-450 g/l one or more solvents selected among esters of plant oils,
c) 100-300 g/l one or more water-miscible polar aprotic cosolvents,
d) 100-250 g/l, of one or more water-immiscible co-solvents, selected among aromatic hydrocarbons and alcohols,
e) 50-150 g/l of an emulsifier system comprising one or more surfactants, and
f) 0-300 g/l of further auxiliaries.

3. The formulation according to claims 1 or 2, wherein the component b) is selected among alkyl esters of fatty acids of plant oils.

4. The formulation according to claim 3, wherein the component b) is selected among methyl esters of fatty acids of plant oils.

5. The formulation according to any of the claims 1 to 4, wherein the component c) is selected among N-methylpyrrolidone, dimethyl sulfox-ide, 2-propanol, tetrahydrofuran, propylene carbonate, gamma-butyrolactone, cyclohexanone, tetrahydrothiophene-1,1-dioxide, N-cyclohexyl-2-pyrrolidone and tetramethylurea.

6. The formulation according to claim 5, wherein the component d) is selected among aromatic hydrocarbons.

7. The formulation according to claim 6, wherein the component d) is selected among solvents or mixture of solvents having Hansen solubility parameters in the ranges δd 14.3-17.9 MPa^{½}, δp 0.4-10.0 MPa^{½} and δh 1.0-13.7 MPa^{½}.

8. The formulation according to claim 7, wherein the component d) is selected among solvents or mixture of solvents having Hansen solubility parameters in the ranges δd 14.4-17.7 MPa^{½}, δp 2.0-8.0 MPa^{½} and δh 7.0-13.6 MPa^{½}.

9. The Formulation according to claim 8 wherein the component d) is selected among C5-C10-alcohols.

10. The formulation according to claim 9 wherein the component d) is selected among C5-C9 alcohols.

11. The formulation according to claim 10 wherein the component d) is selected among C6-C9 alcohols.

12. The formulation according to claim 11 wherein the component d) is octanol.

13. The formulation according to any of the claims 1-12, wherein the component e) is selected among anionic surfactants, non-ionic surfactants, cationic surfactants, zwitterionic surfactants, polymer surfactants, and mixtures thereof.

14. The formulation according to claim 13, wherein the component e) is selected among anionic surfactants, non-ionic surfactants, and mixtures thereof.

15. The formulation according to claim 14, wherein the component e) is selected among anionic surfactants.

16. The formulation according to any of the claims 1 to 15 dissolved in water.

17. A method for the control of fungi comprising applying a formulation according to any of the claims 1 to 16, in diluted form to or near a plant or the seed infested with fungi or susceptible of being infested by fungi.

18. The use of a formulation according to any of the claims 1 to 16 as a fungicide.

19. A method to prevent tebonazole from crystallization when applied in an aqueous spray solution, said method comprising dissolving a formulation according to any of the claims 1 to 16 in water to form said spray solution.

20. The method according to claim 19, wherein the concentration of tebuconazole in the aqueous spray solution is between 0.0001 and 4% by weight of total spray solution.

21. The method according to claim 20, wherein the concentration of tebuconazole is between 0.001 and 3% by weight of aqueous spray solution.

22. The method according to claim 21, wherein the concentration of tebuconazole is between 0.005 to 2% by weight of aqueous spray solution.

## Patentansprüche

1. Konzentrierte flüssige Formulierung, umfassend
a) 50-215 g/l eines Wirkstoffs, ausgewählt aus Triazolfungiziden, wobei das Triazolfungizid aus Tebuconazol ausgewählt ist,
b) 100-600 g/l eines oder mehrerer Lösungsmittel, ausgewählt aus Estern von Pflanzenölen,
c) 50-400 g/l eines oder mehrerer wassermischbarer polarer aprotischer Co-Lösungsmittel bzw. Verschnittmittel,
d) 50-300 g/l eines oder mehrerer wasserunmischbarer Co-Lösungsmittel bzw. Verschnittmittel, ausgewählt aus aromatischen Kohlenwasserstoffen und Alkoholen,
e) 10-200 g/l eines Emulgatorsystems, umfassend ein oder mehrere oberflächenaktive Mittel, und
f) 0-300 g/l weiterer Hilfsstoffe.

2. Formulierung nach Anspruch 1, umfassend
a) 80-210 g/l eines Wirkstoffs, ausgewählt aus Triazolfungiziden, wobei das Triazolfungizid aus Tebuconazol ausgewählt ist,
b) 150-450 g/l eines oder mehrerer Lösungsmittel, ausgewählt aus Estern von Pflanzenölen,
c) 100-300 g/l eines oder mehrerer wassermischbarer polarer aprotischer Co-Lösungsmittel bzw. Verschnittmittel,
d) 100-250 g/l eines oder mehrerer wasserunmischbarer Co-Lösungsmittel bzw. Verschnittmittel, ausgewählt aus aromatischen Kohlenwasserstoffen und Alkoholen,
e) 50-150 g/l eines Emulgatorsystems, umfassend ein oder mehrere oberflächenaktive Mittel, und
f) 0-300 g/l weiterer Hilfsstoffe.

3. Formulierung nach Anspruch 1 oder 2, wobei der Bestandteil b) ausgewählt ist aus Alkylestern von Fettsäuren von Pflanzenölen.

4. Formulierung nach Anspruch 3, wobei der Bestandteil b) ausgewählt ist aus Methylestern von Fettsäuren von Pflanzenölen.

5. Formulierung nach einem der Ansprüche 1 bis 4, wobei der Bestandteil c) ausgewählt ist aus N-Methylpyrrolidon, Dimethylsulfoxid, 2-Propanol, Tetrahydrofuran, Propylencarbonat, gamma-Butyrolacton, Cyclohexanon, Tetrahydrothiophen-1,1-dioxid, N-Cyclohexyl-2-pyrrolidon und Tetramethylharnstoff.

6. Formulierung nach Anspruch 5, wobei der Bestandteil d) ausgewählt ist aus aromatischen Kohlenwasserstoffen.

7. Formulierung nach Anspruch 6, wobei der Bestandteil d) ausgewählt ist aus Lösungsmitteln oder einem Gemisch von Lösungsmitteln mit Hansen-Löslichkeitsparametern in den Bereichen δd 14,3-17,9 MPa^{1/2}, δp 0,4-10,0 MPa^{1/2} und δh 1,0-13,7 MPa^{1/2}.

8. Formulierung nach Anspruch 7, wobei der Bestandteil d) ausgewählt ist aus Lösungsmitteln oder einem Gemisch von Lösungsmitteln mit Hansen-Löslichkeitsparametern in den Bereichen δd 14,4-17,7 MPa^{1/2}, δp 2,0-8,0 MPa^{1/2} und δh 7,0-13,6 MPa^{1/2}.

9. Formulierung nach Anspruch 8, wobei der Bestandteil d) ausgewählt ist aus C5-C10-Alkoholen.

10. Formulierung nach Anspruch 9, wobei der Bestandteil d) ausgewählt ist aus C5-C9-Alkoholen.

11. Formulierung nach Anspruch 10, wobei der Bestandteil d) ausgewählt ist aus C6-C9-Alkoholen.

12. Formulierung nach Anspruch 11, wobei es sich bei dem Bestandteil d) um Octanol handelt.

13. Formulierung nach einem der Ansprüche 1-12, wobei der Bestandteil e) ausgewählt ist aus anionischen oberflächenaktiven Mitteln, nicht-ionischen oberflächenaktiven Mitteln, kationischen oberflächenaktiven Mitteln, zwitterionischen oberflächenaktiven Mitteln, polymeren oberflächenaktiven Mitteln und Gemischen davon.

14. Formulierung nach Anspruch 13, wobei der Bestandteil e) ausgewählt ist aus anionischen oberflächenaktiven Mitteln, nicht-ionischen oberflächenaktiven Mitteln und Gemischen davon.

15. Formulierung nach Anspruch 14, wobei der Bestandteil e) ausgewählt ist aus anionischen oberflächenaktiven Mitteln.

16. Formulierung nach einem der Ansprüche 1 bis 15, die in Wasser gelöst ist.

17. Verfahren zur Bekämpfung von Pilzen, umfassend das Aufbringen einer Formulierung nach einem der Ansprüche 1 bis 16 in verdünnter Form auf oder neben eine Pflanze oder das Saatgut, die/das von Pilzen befallen ist oder im Verdacht steht, mit Pilzen befallen zu sein.

18. Verwendung einer Formulierung nach einem der Ansprüche 1 bis 16 als Fungizid.

19. Verfahren zum Verhindern dessen, dass Tebonazol kristallisiert, wenn es in einer wässrigen Sprühlösung aufgebracht wird, wobei das Verfahren das Lösen einer Formulierung nach einem der Ansprüche 1 bis 16 in Wasser zum Bilden der Sprühlösung umfasst.

20. Verfahren nach Anspruch 19, wobei die Konzentration von Tebuconazol in der wässrigen Sprühlösung zwischen 0,0001 und 4 Gew.-% der gesamten Sprühlösung liegt.

21. Verfahren nach Anspruch 20, wobei die Konzentration von Tebuconazol zwischen 0,001 und 3 Gew.-% der wässrigen Sprühlösung liegt.

22. Verfahren nach Anspruch 21, wobei die Konzentration von Tebuconazol zwischen 0,005 bis 2 Gew.-% der wässrigen Sprühlösung liegt.

## Revendications

1. Formulation liquide concentrée comprenant
a) 50 à 215 g/l d'un ingrédient actif choisi parmi les fongicides triazoles, le fongicide triazole étant choisi comme étant le tébuconazole,
b) 100 à 600 g/l d'un ou plusieurs solvants choisis parmi les esters d'huiles végétales,
c) 50 à 400 g/l d'un ou plusieurs co-solvants aprotiques polaires miscibles à l'eau,
d) 50 à 300 g/l d'un ou plusieurs co-solvants immiscibles à l'eau choisis parmi les hydrocarbures aromatiques et les alcools,
e) 10 à 200 g/l d'un système émulsifiant comprenant un ou plusieurs agents tensioactifs, et
f) 0 à 300 g/l d'autres auxiliaires.

2. Formulation selon la revendication 1, comprenant
a) 80 à 210 g/l d'un ingrédient actif choisi parmi les fongicides triazoles, le fongicide triazole étant choisi comme étant le tébuconazole,
b) 150 à 450 g/l d'un ou plusieurs solvants choisis parmi les esters d'huiles végétales,
c) 100 à 300 g/l d'un ou plusieurs co-solvants aprotiques polaires miscibles à l'eau,
d) 100 à 250 g/l d'un ou plusieurs co-solvants immiscibles à l'eau choisis parmi les hydrocarbures aromatiques et les alcools,
e) 50 à 150 g/l d'un système émulsifiant comprenant un ou plusieurs agents tensioactifs, et
f) 0 à 300 g/l d'autres auxiliaires.

3. Formulation selon la revendication 1 ou 2, dans laquelle le constituant b) est choisi parmi les esters alkyliques d'acides gras d'huiles végétales.

4. Formulation selon la revendication 3, dans laquelle le constituant b) est choisi parmi les esters méthyliques d'acides gras d'huiles végétales.

5. Formulation selon l'une quelconque des revendications 1 à 4, dans laquelle le constituant c) est choisi parmi la N-méthylpyrrolidone, le diméthylsulfoxyde, le 2-propanol, le tétrahydrofuranne, le carbonate de propylène, la gamma-butyrolactone, la cyclohexanone, le tétrahydrothiophène-1,1-dioxyde, la N-cyclohexyl-2-pyrrolidone et la tétraméthylurée.

6. Formulation selon la revendication 5, dans laquelle le constituant d) est choisi parmi les hydrocarbures aromatiques.

7. Formulation selon la revendication 6, dans laquelle le constituant d) est choisi parmi des solvants ou un mélange de solvants ayant des paramètres de solubilité de Hansen dans les gammes de δd 14,3-17,9 MPa^{1/2}, δp 0,4-10,0 MPa^{1/2} et δh 1,0-13,7 MPa^{1/2}.

8. Formulation selon la revendication 7, dans laquelle le constituant d) est choisi parmi des solvants ou un mélange de solvants ayant des paramètres de solubilité de Hansen dans les gammes de δd 14,4-17,7 MPa^{1/2}, δp 2,0-8,0 MPa^{1/2} et δh 7,0-13,6 MPa^{1/2}.

9. Formulation selon la revendication 8, dans laquelle le constituant d) est choisi parmi les alcools en C₅ à C₁₀.

10. Formulation selon la revendication 9, dans laquelle le constituant d) est choisi parmi les alcools en C₅ à C₉.

11. Formulation selon la revendication 10, dans laquelle le constituant d) est choisi parmi les alcools en C₆ à C₉.

12. Formulation selon la revendication 11, dans laquelle le constituant d) est l'octanol.

13. Formulation selon l'une quelconque des revendications 1 à 12, dans laquelle le constituant e) est choisi parmi les agents tensioactifs anioniques, les agents tensioactifs non ioniques, les agents tensioactifs cationiques, les agents tensioactifs zwittérioniques, les agents tensioactifs polymères, et des mélanges de ceux-ci.

14. Formulation selon la revendication 13, dans laquelle le constituant e) est choisi parmi les agents tensioactifs anioniques, les agents tensioactifs non ioniques, et des mélanges de ceux-ci.

15. Formulation selon la revendication 14, dans laquelle le constituant e) est choisi parmi les agents tensioactifs anioniques.

16. Formulation selon l'une quelconque des revendications 1 à 15, dissoute dans de l'eau.

17. Procédé pour lutter contre des champignons, comprenant l'application d'une formulation selon l'une quelconque des revendications 1 à 16, sous forme diluée, à ou près d'une plante ou la graine infestée par des champignons ou susceptible d'être infestée par des champignons.

18. Utilisation d'une formulation selon l'une quelconque des revendications 1 à 16, en tant que fongicide.

19. Procédé pour empêcher la cristallisation du tébuconazole lorsqu'il est appliqué dans une solution aqueuse à pulvériser, ledit procédé comprenant la dissolution d'une formulation selon l'une quelconque des revendications 1 à 16 dans de l'eau pour former ladite solution à pulvériser.

20. Procédé selon la revendication 19, dans lequel la concentration de tébuconazole dans la solution aqueuse à pulvériser est entre 0,0001 et 4 % en poids de la solution à pulvériser totale.

21. Procédé selon la revendication 20, dans lequel la concentration de tébuconazole est entre 0,001 et 3 % en poids de la solution aqueuse à pulvériser.

22. Procédé selon la revendication 21, dans lequel la concentration de tébuconazole est de 0,005 à 2 % en poids de la solution aqueuse à pulvériser.
